# FASCICULE DE BREVET EUROPEEN

(11) **EP 3 080 449 B1**
(45) Date de publication et mention de la délivrance du brevet: **20.05.2020**
(21) Numéro de dépôt: 14827482.2
(22) Date de dépôt: 09.12.2014
(51) Int. Cl.: F03H 1/00, B64G 1/40

(54) **SYSTÈME DE RÉGULATION DE DÉBIT AMÉLIORE POUR L'ALIMENTATION EN FLUIDE PROPULSEUR D'UN PROPULSEUR ÉLECTRIQUE DE VÉHICULE SPATIAL**
VERBESSERTES DURCHFLUSSREGULIERUNGSSYSTEM ZUR BEREITSTELLUNG EINER TREIBMITTELFLÜSSIGKEIT AN EIN ELEKTRISCHES TRIEBWERK EINES RAUMFAHRZEUGS
IMPROVED FLOW REGULATING SYSTEM FOR SUPPLYING PROPELLANT FLUID TO AN ELECTRIC THRUSTER OF A SPACE VEHICLE

(30) Priorité: 11.12.2013 FR 1362430
(43) Date de publication de la demande: 19.10.2016
(73) Titulaire: Safran Aircraft Engines, 75015 Paris (FR)
(72) Inventeur: VIAL, Vanessa, F-27200 Vernon (FR); LORAND, Anthony, F-27940 Notre Dame de l'Isle (FR); GIBOUDEAUX, Kevin, F-83136 Gareoult (FR); LEROI, Vaitua, F-67200 Strasbourg (FR)
(74) Mandataire: Cabinet Beau de Loménie
(86) Numéro de dépôt international: PCT/FR2014/053238
(87) Numéro de publication internationale: WO 2015/086982

(56) Documents cités:
- FR-A1- 2 973 081
- US-A1- 2002 175 247
- C H Edwards ET AL: "DEVELOPMENT AND TESTING OF THE GOCE PROPORTIONAL XENON FEED SYSTEM", Proceedings of the Third International Conference on Spacecraft Propulsion, Cannes, France; 10-13 October 2000, 13 October 2000 (2000-10-13), XP055644351, Retrieved from the Internet: URL:http://articles.adsabs.harvard.edu//fu ll/2000ESASP.465..571E/0000571.000.html [retrieved on 2019-11-20]

## Description

### DOMAINE TECHNIQUE GENERAL

La présente invention concerne le domaine des propulseurs électriques tels que notamment les moteurs à effet Hall, et plus précisément les moyens de contrôle du débit de fluide propulseur délivré à un propulseur électrique dans le cadre d'une application pour un véhicule spatial.

### ETAT DE L'ART

Dans les propulseurs électriques, le fluide propulseur est conservé au sein d'un réservoir. Celui-ci est muni et relié de moyens de contrôle afin de délivrer un débit donné pour assurer le bon fonctionnement du propulseur électrique.
Ces moyens de contrôle comprennent typiquement un régulateur de débit communément désigné par la terminologie anglaise FCU « Flow Control Unit », ou XFC « Xénon Flux Controller » lorsque le fluide propulseur est du Xénon, qui réalise un chauffage contrôlé du fluide au moyen d'un thermocapillaire afin de modifier les propriétés physiques du fluide, et donc son débit en sortie du réservoir.

Il n'existe cependant pas de relation établissant avec certitude une corrélation entre le courant de chauffage du thermocapillaire et le débit sortant en prenant en compte les différentes variables influant sur cette relation, et notamment les paramètres d'environnement traduisant les conditions ambiantes dans lesquelles le régulateur de débit est utilisé. Un débitmètre indépendant est donc communément associé au régulateur de débit, afin de mesurer le débit effectif sortant.

Cependant, dans le cas d'applications spatiales, une telle multiplication des composants afin d'assurer la simple fonction de régulation de débit est problématique en ce qu'elle ajoute de la masse supplémentaire, ce qui est très contraignant compte tenu de la puissance nécessaire pour lancer une masse donnée en orbite géostationnaire.

Une alternative connue consiste à estimer la masse restante d'ergol par une méthode analytique, par exemple en se basant sur la pression et la température au sein du réservoir, pour déterminer la consommation au cours du temps. Une telle méthode permet de ne pas embarquer de débitmètre, mais est cependant peu précise, et afin de conserver une marge de sécurité, les véhicules spatiaux employant une telle méthode peuvent donc être mis en fin de vie avant la fin réelle de consommation totale du fluide propulseur.

L'article de Edwards et al: "Development and Testing of the GOCE Proportional Xenon Feed System", Proceedings of the Third International Conférence on Spacecraft Propulsion, Cannes, France; 10-13 October 2000, XP055644351, décrit un système de régulation de débit d'un fluide propulseur d'un propulseur électrique selon le préambule des revendications 1 et 7.

### PRESENTATION DE L'INVENTION

La présente invention vise ainsi à répondre au moins partiellement à cette problématique, en proposant un système de régulation de débit d'un fluide propulseur de propulseur électrique de véhicule spatial, comprenant un réservoir de fluide propulseur et un régulateur de débit monté en sortie dudit réservoir,
le régulateur de débit comprenant un élément chauffant piloté par un calculateur et adapté pour chauffer le fluide propulseur et en modifier les propriétés physiques afin de faire varier le débit de fluide propulseur sortant du réservoir,
ledit système étant caractérisé en ce que le calculateur comprend une mémoire de stockage dans laquelle est chargée une pluralité de courbes d'étalonnage empiriques déterminées empiriquement définissant le débit de fluide propulseur en fonction de l'intensité de chauffage et des paramètres d'environnement, de sorte que ledit calculateur réalise également une fonction de détermination de débit de fluide propulseur.

La présente invention permet ainsi de cumuler les fonctions de régulation de débit et de débitmètre par un seul et unique composant, à savoir un régulateur de débit sans nécessiter de modifications structurelles de ce dernier, réduisant de ce fait la masse totale du système par rapport à un système conventionnel comprenant deux composants distincts, et présentant une précision accrue par rapport à un système déterminant le débit à partir de relations théoriques.

Selon un mode de réalisation particulier, les courbes d'étalonnage empiriques sont déterminées lors d'essais au sol dudit système de régulation sous différents paramètres d'environnement.

Le calculateur peut également comprendre une pluralité de courbes d'étalonnage semi-empiriques, calculées à partir desdites courbes d'étalonnage empiriques, lesdites courbes d'étalonnage semi-empiriques définissant le débit de fluide propulseur en fonction de l'intensité de chauffage pour des paramètres d'environnement distincts de ceux des courbes d'étalonnage empiriques.

Le calculateur peut être configuré pour, à partir desdites courbes d'étalonnage empiriques, calculer une courbe d'étalonnage semi-empirique définissant le débit de fluide propulseur en fonction de l'intensité de chauffage et des paramètres d'environnement.

Ledit élément chauffant est par exemple un tube thermocapillaire réalisant un chauffage en fonction de l'intensité d'un courant de chauffe qui traverse ledit tube thermocapillaire.

L'invention concerne également un procédé de régulation de débit d'alimentation en fluide propulseur d'un propulseur électrique de véhicule spatial au moyen d'un régulateur de débit comprenant un élément chauffant piloté par un calculateur adapté pour chauffer le fluide propulseur en sortie d'un réservoir de manière à en modifier les propriétés physiques et ainsi à modifier le débit sortant du réservoir, caractérisé en ce qu'une pluralité de courbes d'étalonnage empiriques sont déterminées de manière à définir le débit de fluide propulseur en fonction de l'intensité de chauffage et des paramètres d'environnement, lesdites courbes d'étalonnage étant chargées dans le calculateur de sorte qu'il réalise également une fonction de détermination de débit de fluide propulseur.

Les courbes d'étalonnage empiriques sont typiquement déterminées lors d'essais au sol dudit système de régulation sous différentes conditions de température et de pression.

Selon un mode de réalisation particulier, on détermine également une pluralité de courbes d'étalonnage semi-empiriques, calculées à partir desdites courbes d'étalonnage empiriques, lesdites courbes d'étalonnage théoriques étant chargées dans le calculateur.

Selon un mode de réalisation particulier, lors de l'utilisation du régulateur de débit, ledit calculateur calcule à partir desdites courbes d'étalonnage empiriques, une courbe d'étalonnage semi-empirique définissant le débit de fluide propulseur en fonction de l'intensité de chauffage et des paramètres d'environnement.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- la figure 1 annexée qui représente schématiquement un système selon un aspect de l'invention,
- la figure 2 est un exemple de courbe d'étalonnage empirique de débit en fonction de l'intensité du chauffage appliqué.

### DESCRIPTION DETAILLEE

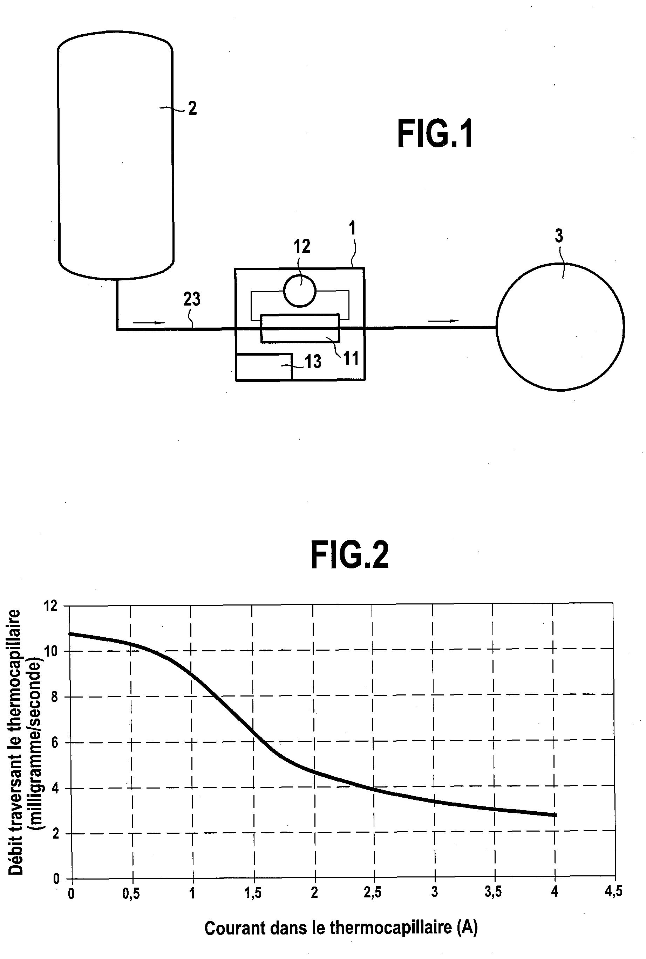

La figure 1 illustre schématiquement un système selon un aspect de l'invention.

On illustre sur la figure 1 un système de régulation de débit entre un réservoir 2 de fluide propulseur et un propulseur électrique 3 reliés par un conduit 23 sur lequel est disposé un régulateur de débit 1.
Le propulseur électrique peut être par exemple un moteur à effet Hall, un propulseur à plasma pulsé, un propulseur ionique ou plus généralement tout propulseur électrique utilisant un fluide propulseur.

Le régulateur de débit 1 comprend un élément chauffant 11, typiquement alimenté par un générateur 12 et piloté par un calculateur 13. L'élément chauffant 11 applique un chauffage direct ou indirect au fluide propulseur circulant dans le conduit 23, dont l'intensité est pilotée par le calculateur 13. Le régulateur de débit 1 est typiquement monté en sortie du réservoir 2.

Le chauffage du fluide propulseur permet de modifier les propriétés physiques du fluide propulseur, ce qui modifie les pertes de charge dans le conduit 23, et modifie donc le débit de fluide propulseur acheminé au propulseur électrique 3. Plus la température du fluide propulseur est élevée, plus la viscosité de ce dernier augmente, et donc plus le débit de fluide propulseur dans le conduit 23 diminue.
L'élément chauffant 11 peut être de différents types.
Il peut par exemple s'agir d'un tube thermocapillaire réalisant un chauffage du conduit 23 en fonction de l'intensité d'un courant de chauffe qui traverse ledit tube thermocapillaire, le courant de chauffe étant alors délivré par le générateur 12 et piloté par le calculateur 13. Le fluide propulseur circulant dans le conduit 23 est ainsi chauffé indirectement par le tube thermocapillaire, qui le chauffe par l'intermédiaire du conduit 23. Ce mode de réalisation est représenté sur la figure 1.
Le tube thermocapillaire a alors par exemple une forme de serpentin ou de spirale afin d'augmenter la surface de chauffage par rapport à une section droite.

L'élément chauffant 11 peut également être une résistance disposée dans le conduit 23, réalisant un chauffage direct du fluide propulseur dans le conduit 23 en fonction de l'intensité d'un courant de chauffe qui traverse la résistance, le courant de chauffe étant alors délivré par le générateur 12 et piloté par le calculateur 13.

L'élément chauffant 11 peut également être un échangeur thermique, par exemple un échangeur thermique de type fluide-fluide, dans lequel circule un fluide caloporteur dont la température est pilotée par le calculateur 13 de manière à réaliser un échange thermique avec le fluide propulseur circulant dans le conduit 23 pour l'amener à la température souhaitée.

Selon la présente invention, le calculateur 13 est configuré de manière à réaliser également une fonction de débitmètre, en délivrant une information précise relative débit de fluide propulseur dans le conduit 23 en fonction de l'intensité du chauffage appliqué au fluide propulseur par l'élément chauffant 11.

Le calculateur 13 comprend une pluralité de courbes d'étalonnage empiriques déterminées empiriquement définissant le débit de fluide propulseur en fonction de l'intensité de chauffage et des paramètres d'environnement tels que notamment la température ambiante et la pression ambiante. Ces courbes d'étalonnage empiriques sont chargées dans une mémoire de stockage du calculateur 13, de manière à pouvoir être utilisées lors du fonctionnement du système. Ces courbes d'étalonnage empiriques sont chargées dans une mémoire de stockage du calculateur 13.

Le calculateur 13 est ainsi configuré de manière à comprendre un faisceau de courbes empiriques définissant la valeur de débit en fonction de l'intensité de chauffage et en fonction des différents paramètres d'environnement considérés. Ces courbes empiriques forment une série d'abaques permettant la détermination du débit.

Ainsi, en fonction des paramètres d'environnement lors de l'utilisation, par exemple en fonction des paramètres tels que la température du système et la pression en entrée du système, le calculateur 13 détermine la courbe d'étalonnage appropriée, et détermine le débit de fluide propulseur dans le conduit 23 en fonction de l'intensité du chauffage appliqué par l'élément chauffant 11. Par exemple, à partie de la température du système, de la pression en entrée du système et du courant appliqué sur l'élément chauffant 11, le calculateur 13 détermine la courbe chargée dans sa mémoire de stockage qui est la plus proches de ces différents paramètres, et en déduit ainsi la valeur de débit à cet instant.

Le régulateur de débit 1 réalise ainsi une fonction de débitmètre par l'intermédiaire de son calculateur 13, sans nécessiter l'ajout de composants additionnels, et donc minimisant la masse globale du système.

Les courbes d'étalonnage empiriques sont par exemple déterminées lors d'essais au sol du système de régulation de débit sous différents paramètres d'environnement appliqués artificiellement et reproduisant sensiblement les paramètres d'environnement auxquels sera soumis le système de régulation de débit lors de son utilisation sur un véhicule spatial.

La figure 2 est un exemple de courbe d'étalonnage empirique de débit en fonction de l'intensité du chauffage appliqué, pour des paramètres d'environnement donnés. Cette courbe a été réalisée en utilisant un thermocapillaire en tant qu'élément chauffant, et indique le débit traversant le thermocapillaire en fonction du courant dans le thermocapillaire qui traduit l'intensité de chauffage.

Le calculateur 13 peut ainsi, en fonction de l'évolution de l'intensité du chauffage appliqué pendant une durée T, déterminer la quantité de fluide propulseur ayant traversé le régulateur de débit 1 pendant cette durée T.

De telles courbes établissent une relation plus précise entre l'intensité du chauffage et le débit que des formules théoriques générales ayant une précision restreinte et ne permettant pas une détermination fine du débit de fluide propulseur en fonction de l'évolution des différents paramètres d'environnement tels que par exemple la température et la pression ambiante.

De manière avantageuse, on réalise une pluralité de courbes d'étalonnage semi-empiriques à partir des différentes courbes d'étalonnage empiriques obtenues lors d'essais, de manière à avoir un incrément plus fin entre deux courbes successives et donc une précision accrue, sans nécessiter un nombre d'essais excessif.
Ces courbes d'étalonnage semi-empiriques sont par exemple obtenues en considérant une évolution linéaire entre deux courbes d'étalonnage empiriques.
Si on considère par exemple deux courbes d'étalonnage théoriques d'évolution du débit en fonction de l'intensité de chauffage, obtenues pour deux valeurs de pression distinctes P1 et P2 et pour les autres paramètres d'environnement qui sont constants, on peut ainsi obtenir une incrémentation plus fine pour des valeurs de pression comprises entre P1 et P2 à partir de ces deux courbes d'étalonnage empiriques. On peut bien entendu également appliquer le même principe pour d'autres paramètres que la pression, par exemple la température ambiante.

Ces courbes d'étalonnage semi-empiriques peuvent être réalisées par une unité de calcul au sol suite à la réalisation des courbes d'étalonnage empiriques, et ensuite chargées dans le calculateur 13.

Les courbes d'étalonnage semi-empiriques peuvent également être directement réalisées par le calculateur 13 en fonction des conditions d'utilisation du système de régulation. Ainsi, on charge alors avantageusement uniquement les courbes d'étalonnage empiriques dans le calculateur, réduisant la mémoire nécessaire au stockage des différentes informations.

La présente invention permet ainsi de réaliser la fonction de débitmètre par le régulateur de débit 1, sans nécessiter l'ajout de composants additionnels, et permet donc de ne pas augmenter la masse totale du système tout en conservant une détermination précise du débit.

## Revendications

1. Système de régulation de débit d'un fluide propulseur d'un propulseur électrique (3) de véhicule spatial, comprenant un réservoir (2) de fluide propulseur et un régulateur de débit (1) monté en sortie dudit réservoir (2),
le régulateur de débit (1) comprenant un élément chauffant (11) piloté par un calculateur (13) et adapté pour chauffer le fluide propulseur et en modifier les propriétés physiques afin de faire varier le débit de fluide propulseur sortant du réservoir,
ledit système étant **caractérisé en ce que** le calculateur (13) comprend une mémoire de stockage dans laquelle est chargée une pluralité de courbes d'étalonnage empiriques déterminées empiriquement définissant le débit de fluide propulseur en fonction de l'intensité de chauffage et de paramètres d'environnement, de sorte que ledit calculateur (13) réalise également une fonction de détermination de débit de fluide propulseur.

2. Système selon la revendication 1, dans lequel les courbes d'étalonnage empiriques sont déterminées lors d'essais au sol dudit système de régulation sous différents paramètres d'environnement.

3. Système selon l'une des revendications 1 ou 2, dans lequel ledit calculateur (13) comprend une pluralité de courbes d'étalonnage semi-empiriques, calculées à partir desdites courbes d'étalonnage empiriques, lesdites courbes d'étalonnage semi-empiriques définissant le débit de fluide propulseur en fonction de l'intensité de chauffage pour des paramètres d'environnement distincts de ceux des courbes d'étalonnage empiriques.

4. Système selon l'une des revendications 1 à 3, dans lequel ledit calculateur (13) est configuré pour, à partir desdites courbes d'étalonnage empiriques, calculer une courbe d'étalonnage semi-empirique définissant le débit de fluide propulseur en fonction de l'intensité de chauffage et des paramètres d'environnement.

5. Système selon l'une des revendications 1 à 4, dans lequel ledit élément chauffant (11) est un tube thermocapillaire réalisant un chauffage en fonction de l'intensité d'un courant de chauffe qui traverse ledit tube thermocapillaire.

6. Système selon l'une des revendications 1 à 5 dans lequel ledit fluide propulseur est du Xénon.

7. Procédé de régulation de débit d'alimentation en fluide propulseur d'un propulseur électrique (3) de véhicule spatial au moyen d'un régulateur de débit (1) comprenant un élément chauffant (11) piloté par un calculateur (13) adapté pour chauffer le fluide propulseur en sortie d'un réservoir (2) de manière à en modifier les propriétés physiques et ainsi à modifier le débit de fluide propulseur sortant du réservoir (2), **caractérisé en ce qu'**une pluralité de courbes d'étalonnage empiriques sont déterminées de manière à définir le débit de fluide propulseur en fonction de l'intensité de chauffage et des paramètres d'environnement, lesdites courbes d'étalonnage étant chargées dans le calculateur (13) de sorte qu'il réalise également une fonction de détermination de débit de fluide propulseur.

8. Procédé selon la revendication 7, dans lequel les courbes d'étalonnage empiriques sont déterminées lors d'essais au sol dudit système de régulation sous différents paramètres d'environnement.

9. Procédé selon l'une des revendications 7 ou 8 dans lequel on détermine également une pluralité de courbes d'étalonnage semi-empiriques, définies par interpolation à partir desdites courbes d'étalonnage empiriques, lesdites courbes d'étalonnage théoriques étant chargées dans le calculateur (13).

10. Procédé selon l'une des revendications 7 à 9, dans lequel lors de l'utilisation du régulateur de débit (1), ledit calculateur (13) calcule à partir desdites courbes d'étalonnage empiriques, une courbe d'étalonnage semi-empirique définissant le débit de fluide propulseur en fonction de l'intensité de chauffage et des paramètres d'environnement.

## Patentansprüche

1. System zur Regelung des Durchsatzes eines Antriebsfluids eines elektrischen Triebwerks (3) eines Raumfahrzeugs, umfassend einen Behälter (2) für das Antriebsfluid und einen Durchsatzregler (1), der am Ausgang des genannten Behälters (2) montiert ist,
wobei der Durchsatzregler (1) ein Heizelement (11) umfasst, das von einem Computer (13) gesteuert wird und dazu ausgelegt ist, das Antriebsfluid zu erhitzen und die physikalischen Eigenschaften davon zu modifizieren, um den Durchsatz des Antriebsfluids zu variieren, das aus dem Behälter austritt,
wobei das System **dadurch gekennzeichnet ist, dass** der Computer (13) einen Memory-Speicher umfasst, in den mehrere empirische Kalibrierkurven geladen sind, die empirisch bestimmt sind und den Durchsatz des Antriebsfluids als Funktion der Heizintensität und von Umgebungsparametern derart definieren, dass der Computer (13) auch eine Funktion der Bestimmung des Durchsatzes des Antriebsfluids durchführt.

2. System nach Anspruch 1, wobei die empirischen Kalibrierkurven durch Versuche am Boden des genannten Regelungssystems unter verschiedenen Umgebungsparametern bestimmt sind.

3. System nach einem der Ansprüche 1 oder 2, wobei der genannte Computer (13) mehrere semi-empirische Kalibrierkurven umfasst, die aus den genannten empirischen Kalibrierkurven berechnet sind, wobei die genannten semi-empirischen Kalibrierkurven den Durchsatz des Antriebsfluids als Funktion der Heizintensität für Umgebungsparameter definieren, die von jenen der empirischen Kalibrierkurven verschieden sind.

4. System nach einem der Ansprüche 1 bis 3, wobei der genannte Computer (13) dazu ausgelegt ist, aus den empirischen Kalibrierkurven eine semi-empirische Kalibrierkurve zu berechnen, die den Durchsatz des Antriebsfluids als Funktion der Heizintensität und von Umgebungsparametern definiert.

5. System nach einem der Ansprüche 1 bis 4, wobei das genannte Heizelement (11) ein Thermokapillarrohr ist, das ein Erhitzen als Funktion der Intensität eines Heizstroms durchführt, der das genannte Thermokapillarrohr durchquert.

6. System nach einem der Ansprüche 1 bis 5, wobei das genannte Antriebsfluid Xenon ist.

7. Verfahren zur Regelung des Durchsatzes der Versorgung eines elektrischen Triebwerks (3) eines Raumfahrzeugs mit einem Antriebsfluid mit Hilfe eines Durchsatzreglers (1), umfassend ein Heizelement (11), das von einem Computer (13) gesteuert wird und dazu ausgelegt ist, am Ausgang eines Behälters (2) das Antriebsfluid zu erhitzen, um dessen physikalische Eigenschaften zu modifizieren und so den Durchsatz des Antriebsfluids zu modifizieren, das aus dem Behälter (2) austritt,
**dadurch gekennzeichnet, dass** mehrere empirische Kalibrierkurven bestimmt werden, um den Durchsatz des Antriebsfluids als Funktion der Heizintensität und von Umgebungsparametern zu definieren, wobei die genannten Kalibierkurven in den Computer (13) derart geladen werden, dass er auch eine Funktion der Bestimmung des Durchsatzes des Antriebsfluids durchführt.

8. Verfahren nach Anspruch 7, wobei die empirischen Kalibrierkurven bei Versuchen am Boden des genannten Regelungssystems unter verschiedenen Umgebungsparametern bestimmt werden.

9. Verfahren nach Anspruch 7 oder 8, wobei auch mehrere semi-empirische Kalibrierkurven bestimmt werden, die durch Interpolation aus den genannten empirischen Kalibrierkurven definiert werden, wobei die genannten theoretischen Kalibrierkurven in den Computer (13) geladen werden.

10. Verfahren nach einem der Ansprüche 7 bis 9, wobei bei der Verwendung des Durchsatzreglers (1) der genannte Computer (13) aus den genannten empirischen Kalibrierkurven eine semi-empirische Kalibrierkurve berechnet, die den Durchsatz des Antriebsfluids als Funktion der Heizintensität und von Umgebungsparametern definiert.

## Claims

1. A system for regulating the flow rate of a propellant fluid for an electrical thruster (3) of a space vehicle, the vehicle including a tank (2) of propellant fluid and a flow rate regulator (1) connected to the outlet of said tank (2) ;
the flow rate regulator (1) including a heater element (11) controlled by a computer (13) and adapted to heat the propellant fluid and to modify its physical properties so as to vary the flow rate of propellant fluid leaving the tank;
said system being **characterized in that** the computer (13) includes a storage memory having loaded therein a plurality of empirical calibration curves that have been determined empirically for defining the flow rate of propellant fluid as a function of the magnitude of heating and as a function of environmental parameters, so that said computer (13) also performs a function of determining the flow rate of the propellant fluid.

2. A system according to claim 1, wherein the empirical calibration curves are determined during ground testing of said regulator system under various environmental parameters.

3. A system according to claim 1 or claim 2, wherein said computer (13) has a plurality of semi-emprirical calibration curves are calculated on the basis of said empirical calibration curves, said semi-emprirical calibration curves defining the propellant fluid flow rate as a function of the magnitude of heating for environmental parameters that are different from those of the empirical calibration curves.

4. A system according to any one of claims 1 to 3, wherein said computer (13) is configured to use said empirical calibration curves to calculate a semi-emprirical calibration curve defining the flow rate of propellant fluid as a function of the magnitude of heating and of environmental parameters.

5. A system according to any one of claims 1 to 4, wherein said heater element (11) is a thermocapillary tube providing heating as a function of the magnitude of heating current flowing through said thermocapillary tube.

6. A system according to any one of claims 1 to 5, wherein said propellant fluid is xenon.

7. A method of regulating the flow rate at which propellant fluid is fed to an electrical thruster (3) of a space vehicle by means of a flow rate regulator (1) comprising a heater element (11) controlled by a computer (13) and adapted to heat the propellant fluid at the outlet from a tank (2) so as to modify its physical properties and thus modify the flow rate of propellant fluid leaving the tank (2);
the method being **characterized in that** a plurality of empirical calibration curves are determined so as to define the propellant fluid flow rate as a function of the magnitude of the heating and as a function of environmental parameters, said calibration curves being loaded into the computer (13) so that it also performs a function of determining the flow rate of propellant fluid.

8. A method according to claim 7, wherein the empirical calibration curves are determined on the ground by testing said regulator system under various environmental parameters.

9. A method according to claim 7 or claim 8, wherein a plurality of semi-emprirical calibration curves are also determined by interpolation from said empirical calibration curves, said theoretical calibration curves being loaded into the computer (13).

10. A method according to any one of claims 7 to 9, wherein while the flow rate regulator (1) is in use, said computer (13) uses said empirical calibration curves to calculate a semi-emprirical calibration curve defining the flow rate of propellant fluid as a function of the magnitude of heating and of environmental parameters.
